# EUROPEAN PATENT APPLICATION

(11) **EP 2 034 434 A1**
(43) Date of publication of application: **11.03.2009**
(21) Application number: 08163670.6
(22) Date of filing: 04.09.2008
(51) Int. Cl.: G06Q 30/00, H04L 29/08

(54) **Digital asset delivery to different devices**

(30) Priority: 04.09.2007 US 849711
(71) Applicant: Apple Inc., Cupertino, CA 95014 (US)
(72) Inventor: Ward, Alan, Boulder, CA 80301 (US); Meldrum, Colin, Berkeley, CA 94703 (US); Mirrashidi, Payam, San Francisco, CA 94117 (US); Gautier, Patrice, San Francisco, CA 94121 (US); Robbin, Jeffrey L, Los Altos, CA 94022 (US)
(74) Representative: Alton, Andrew

(57) **Abstract**

Improved approaches to electronically deliver digital assets to appropriate electronic devices are disclosed. In one embodiment, a user can purchase access rights to one or more digital assets from an online digital asset store, and then the one or more digital assets can be electronically delivered to one or more electronic devices associated with the user. Advantageously, different types of digital assets can be delivered to different electronic devices of the user, whereby limited resources of the different electronic devices can be used in a more intelligent manner.

## Description

### BACKGROUND OF THE INVENTION

### Field of the Invention

The present invention relates to delivery of digital assets and, more particularly, to delivery of digital assets acquired online to appropriate electronic devices.

### Description of the Related Art

Conventionally, users have used host computers to access an online media store via a network connection to the Internet to browse, search and purchase various different media items. Once a media item is purchased by a user, the media item can be delivered to the host computer from which the user accesses the online media store. The delivery of the purchased media item is performed by downloading the media item over the network connection to the host computer used by the user.

Recently, more types of electronic devices have been provided with the ability to access the Internet. Users can now interact with an online media store from different types of electronic devices. Hence, there is a need to manage the delivery of purchased media items to one or more electronic devices user.

### SUMMARY OF THE INVENTION

The invention pertains to improved approaches to electronically deliver digital assets to appropriate electronic devices. In one embodiment, a user can purchase access rights to one or more digital assets from an online digital asset store, and then the one or more digital assets can be electronically delivered to one or more electronic devices associated with the user. Advantageously, different types of digital assets can be delivered to different electronic devices of the user, whereby limited resources of the different electronic devices can be used in a more intelligent manner.

The invention can be implemented in numerous ways, including as a method, system, device, or apparatus (including computer readable medium or graphical user interface). Several embodiments of the invention are discussed below.

As a method for delivering an acquired digital asset from an online digital asset store to an electronic device via a network, one embodiment of the invention includes at least: receiving, via an acquisition device, a user selection of a digital asset available from an online digital asset store; providing usage rights to the digital asset available from the online digital asset store; determining whether the digital asset is be delivered to the acquisition device; arranging for delivery of the digital asset to the acquisition device when it is determined that the digital asset is be delivered to the acquisition device; determining whether the digital asset is be delivered to at least one destination device other than the acquisition device; and arranging for delivery of the digital asset to the at least one destination device when it is determined that the digital asset is be delivered to the at least one destination device.

The acquisition device can be a handheld electronic device.

The acquisition device can be a portable communication device supporting wireless voice communication and wireless data communication.

The at least one destination device can be a personal computer.

As a computer readable medium including at least executable computer program code tangibly stored thereon for delivering at least one digital asset from an online digital asset store to an electronic device via a network, one embodiment of the invention includes at least: computer program code for acquiring usage rights to a digital asset from the online digital asset store; computer program code for determining whether the digital asset is be delivered to at least one of a plurality of potential destination devices; and computer program code for arranging for delivery of the digital asset to the at least one of the plurality of potential destination devices when it is determined that the digital asset is be delivered to at least one of the plurality of potential destination devices.

The usage rights and the plurality of destination devices can both be associated with a particular user having a user account with the online digital asset store.

Said computer program code for providing usage rights can comprise computer program code for permitting limited use of the digital asset by the at least one of the plurality of destination devices associated with the user account.

The online digital asset store can be an online media store, and the digital asset can include at least one media item.

The digital asset can have an asset type associated therewith, and said computer program code for determining whether the digital asset is be delivered to at least one of a plurality of potential destination devices can be dependent on the asset type.

The digital asset can be a collection of digital assets, and each of the digital assets can be processed individually to determine whether the digital asset is be delivered to at least one of a plurality of potential destination devices other than the acquisition device.

Said computer readable medium can further comprises computer program code for accessing an online digital asset store from an acquisition device to identify the digital asset, the acquisition device being one of the destination devices.

As an online media store, one embodiment of the invention includes at least: a delivery queue provide for each of a plurality of user accounts, the delivery queue for each user account operating to separately queue media content for delivery to a plurality of electronic devices associated with the user account; a queue manager for coordinating entries in the delivery queue for media content to be available to at least one of the electronic devices associated with one or more of the plurality of user accounts; and a delivery manager for managing delivery of the media content identified by the entries in the delivery queue to the respective electronic devices.

As a graphical user interface, one embodiment of the invention includes at least a metadata portion describing a digital asset that has been acquired, and a destination portion describing one of a plurality of destination devices for which the digital assets is to be or has been delivered.

Other aspects and advantages of the invention will become apparent from the following detailed description taken in conjunction with the accompanying drawings which illustrate, by way of example, the principles of the invention.

### BRIEF DESCRIPTION OF THE DRAWINGS

The invention will be readily understood by the following detailed description in conjunction with the accompanying drawings, wherein like reference numerals designate like structural elements, and in which:

FIG. 1 is a block diagram of the digital asset acquisition system according to one embodiment of the invention.

FIG. 2 is a flow diagram of a delivery scheduling process according to one embodiment of the invention.

FIG. 3 is a flow diagram of a media store process according to one embodiment of the invention.

FIG. 4 is a flow diagram of a download process according to one embodiment of the invention.

FIG. 5 illustrates an exemplary graphical user interface according to one embodiment of the invention.

### DETAILED DESCRIPTION OF THE INVENTION

The invention pertains to improved approaches to electronically deliver digital assets to appropriate electronic devices. In one embodiment, a user can purchase access rights to one or more digital assets from an online digital asset store, and then the one or more digital assets can be electronically delivered to one or more electronic devices associated with the user. Advantageously, different types of digital assets can be delivered to different electronic devices of the user, whereby limited resources of the different electronic devices can be used in a more intelligent manner.

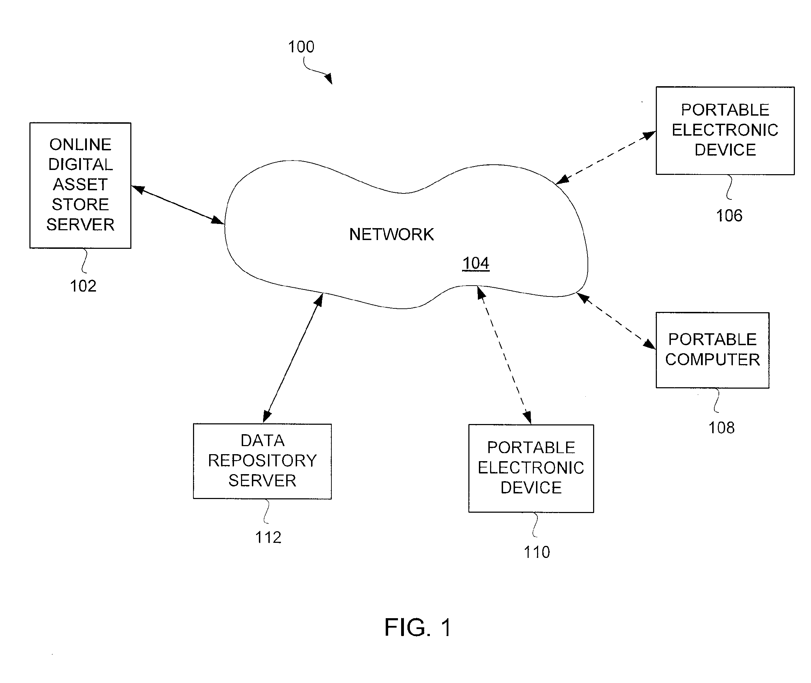

Embodiments of the invention are discussed below with reference to FIGs. 1 - 5. However, those skilled in the art will readily appreciate that the detailed description given herein with respect to these figures is for explanatory purposes as the invention extends beyond these limited embodiments.

FIG. 1 is a block diagram of the digital asset acquisition system 100 according to one embodiment of the invention. The digital asset acquisition system 100 includes an online digital asset store server 102. The online digital asset store server 102 hosts an online digital asset store. The online digital asset store facilitates searching, browsing and purchasing of digital assets. The online digital asset store server 102 is coupled to a network 104. The network 104 can pertain to a data network. The network 104 can pertain to a local area network, a wide area network or a global network (e.g., the Internet).

The digital asset acquisition system 100 also includes a portable electronic device 106, a portable computer 108 and a desktop computer 110. Here, any of these devices 106, 108 and 110 can couple to the data network 104 over a wired or wireless network link.

According to one embodiment of the invention, when a digital asset has been purchased from the online digital asset store by a user, the digital asset can be delivered via the data network 104 to one or more destination devices that are associated with the user. As illustrated in FIG. 1, the destination devices for the digital asset that has been purchased can include, for example, the portable electronic device 106, the portable computer 108 and the desktop computer 110. Depending upon the type of digital asset that has been purchased, certain of the destination devices associated with the user may be more appropriate than others. Consequently, the online digital asset store server 102 can cause the digital asset to be delivered (e.g., downloaded) to the one or more destination devices being deemed most appropriate. The determination of which of the one or more destination devices that are most appropriate can involve considerations of one or more of: type of digital asset, available network bandwidth, device capabilities (e.g., playback capabilities, storage capacity, display size, etc.), or user preferences.

The digital assets being purchased and delivered according to the digital asset acquisition system 100 all are, in one embodiment, media items. The media items can be classified into different types of media items, including audio items, video items, image items, etc. The type of media item can be used in determining which of the destination devices are appropriate to receive the media item. For example, a small, highly portable destination device with relatively limited storage capacity or with a relatively low bandwidth network connection may not be an appropriate destination device for a media item that is relative large, such as a video item (e.g., full length movie).

In one embodiment, the digital asset acquisition system 100 can also include a data repository 112 that can be coupled to the network 104. The data repository can store the digital content for the various digital assets offered for purchase by the online digital asset store. Hence, in such an embodiment, and the delivery of a purchased digital asset can be provided from the data repository 112 to one or more of the devices 106, 108 and 112.

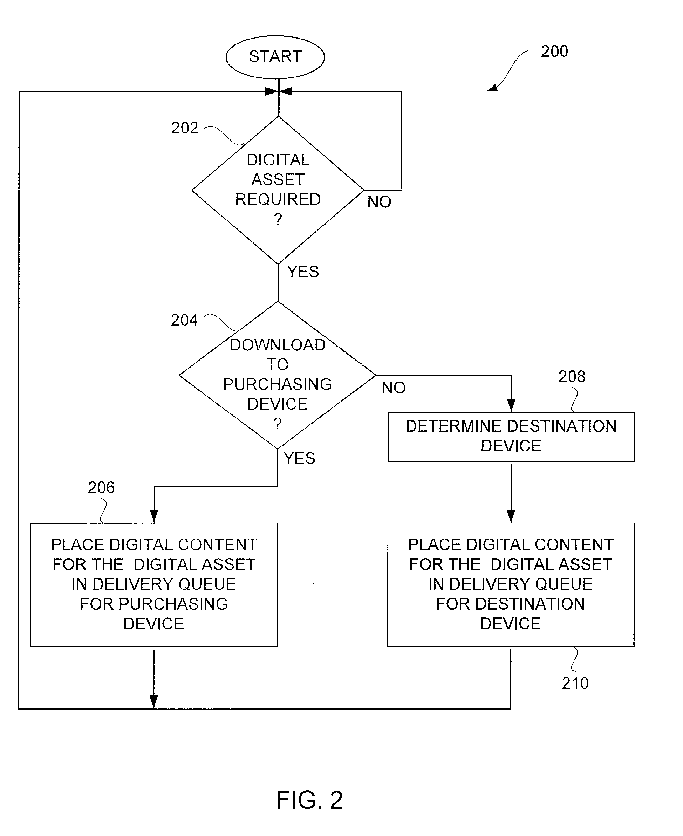

FIG. 2 is a flow diagram of a delivery scheduling process 200 according to one embodiment of the invention. The delivery scheduling process 200 is processing utilized to schedule delivery of a digital asset to a destination device. The delivery scheduling process 200 is, for example, performed by the online digital asset store server 102 or the data repository server 112 illustrated in FIG. 1.

The delivery scheduling process 200 can begin with a decision 202 that determines whether a digital asset has been acquired. For example, a digital asset can be deemed to have been acquired when it is purchased or leased (rented), such as being purchased or leased from the online digital asset store. When the decision 202 determines that a digital asset has not been acquired, there is no need to schedule delivery of any digital asset; hence, the delivery scheduling process 200 can await acquisition of a digital asset.

Once the decision 202 determines that a digital asset has been acquired, a decision 204 can determine whether the digital asset is to be downloaded to a purchasing device. Here, the purchasing device is the electronic device from which the user interacted when purchasing the digital asset from the online digital asset store. When the decision 204 determines that the digital asset is to be downloaded to the purchasing device, the digital content for the digital asset can be placed 206 in a delivery queue for the purchasing device. In one scenario, when the purchasing device remains connected to the network after acquiring the digital asset, download of the digital content for the digital assets can immediate be activated to deliver the digital asset to the purchasing device. In another scenario, when the purchasing device is disconnected from the network, download of the digital content for the digital asset is deferred until a later point in time when the purchasing device is later connected to the network.

On the other hand, when the decision 204 determines and that the digital asset is not to be downloaded to the purchasing device, a destination device can be determined 208. Here, the destination device can be an electronic device other than the purchasing device. Next, digital content for the digital asset can be placed 210 in a delivery queue for the destination device. The digital content for the digital asset can subsequently be delivered to the destination device when the destination device is later connected to the network.

Following the blocks 206 and 210, the delivery scheduling process 200 can return to repeat the decision 202 so that as additional assets are acquired from the online digital asset store they can be scheduled for delivery in a similar manner.

In one embodiment, the block 208 can determine one or more potential destination devices for the digital asset that is to be delivered. That is, the digital assets could in some cases be potentially delivered to one or more destination devices. In one implementation, after a first of the potential destination devices receives the digital asset, the digital asset can be removed from the delivery queue or queues of the one or more destination devices. Here, in this implementation, once the digital asset is delivered to one of the potential destination devices, the digital asset can be removed from the one or more delivery queues for the one or more potential destination devices as it need not be further delivered to the other of the potential destination devices.

Accordingly, digital content for the digital asset that has been acquired through use of a purchasing device can be scheduled for delivery to either the purchasing device itself or another suitable destination device. For example, with reference to FIG. 1, if a user elects to purchase a digital asset from the online digital asset store while using the portable electronic device 106, then the portable electronic device 106 pertains to the purchasing device. Further, in such an example, if the digital asset is determined to be such that it should not be delivered to the portable electronic device 106 but to the desktop computer 110, the desktop computer 110 can be chosen as the destination device. Hence, the digital content for the digital asset can be placed 210 in the delivery queue for the desktop computer 110. When the desktop computer 110 is available to the network 104, the digital content for the digital asset can be transmitted from the delivery queue for the desktop computer 110 to the desktop computer 110.

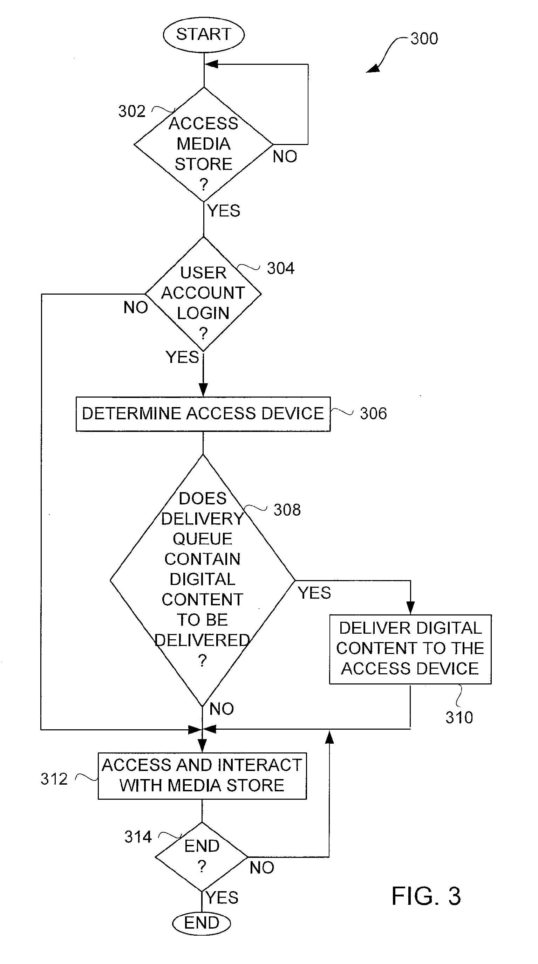

FIG. 3 is a flow diagram of a media store process 300 according to one embodiment of the invention. The media store process 300 can begin with a decision 302 that determines whether an online media store has been accessed. Here, a media store, such as the online digital asset store, can be accessed by various different electronic devices via a network such as illustrated in FIG. 1. When the decision 302 determines that an online media store is being accessed by an electronic device, the media store process 300 continues. In other words, the media store process 300 concerns processing that is performed when an electronic device accesses the media store.

Once the decision 302 determines that the media store is being accessed, a decision 304 determines whether the user of the electronic device has logged in to their user account. When the user has logged in to their user account, the media store understands the user account associated with the user. The user account, among other things, provides a download queue for the user. The download queue can schedule download of acquired media items (digital assets) to one or more appropriate destination devices. Here, for example, the user account can be associated with (i) a single queue that handles one or more destination devices or (ii) multiple queues, such as one queue for each destination device. Also, each of the destination devices can be identified by a device identifier (e.g., GUID). Hence, when the decision 304 determines that the user is logged in to their user account, the access device can be determined 306. Here, the access device being determined 306 is the access device utilized at this time by the user to access the online media store. Since a user can potentially utilize a plurality of different access devices, the particular access device being utilized is determined 306.

Next, a decision 308 to determines whether a delivery queue contains digital content to be delivered to the determined access device. When the decision 308 determines that the delivery queue does contain digital content to be delivered to the determined access device, the digital content can be delivered 310 to the particular access device. In particular, the digital content can be downloaded over the network to the particular access device. The downloading can occur in a background mode or a primary mode fir the particular access device. The downloading can also be stopped by a user of the particular access device or by a loss of network access between the access device and the network.

Following block 310, as well as directly following the decision 308 when the delivery queue does not contain digital content to be delivered, the media store process 300 can permit the user of the access device to access and interact 312 with the online media store. Here, various operations can be performed with respect to the online media store, such as searching, browsing, previewing or purchasing media items available from the media storm. Also, it should be noted that when the decision 304 determines that a user has not logged in to the media store, the media store process 300 can proceeded to the block 312 while bypassing blocks 306-310.

At some point thereafter, a user may decide to leave the online media store. Hence, a decision 314 can determine whether the user desires to end access to the online media store. When the user does not desire to leave the online media store, the user can continue to access and interact 312 with the online media store. However, when the decision 314 determines that the user desires to leave the online media store, the media store process 300 can end. If the user was logged in to the online media store, the user can be logged out when the media store process 300 ends.

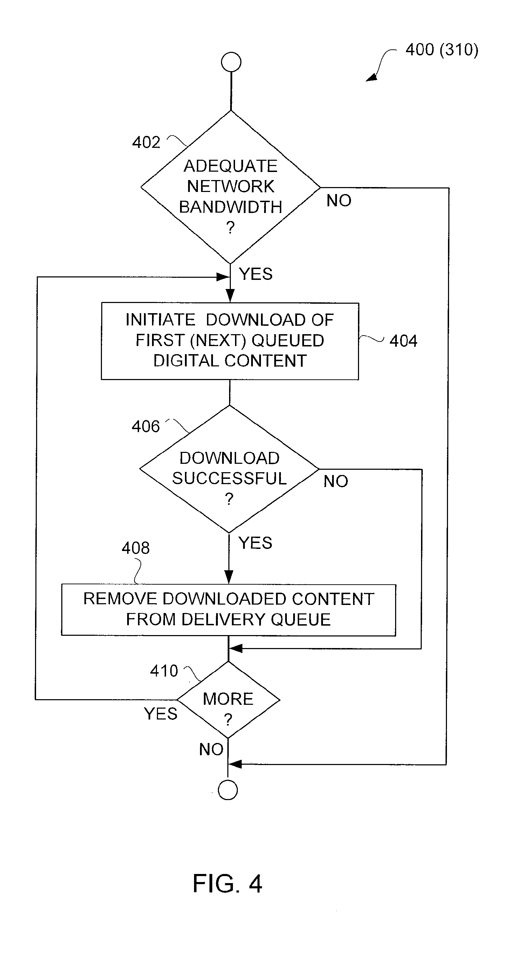

FIG. 4 is a flow diagram of a download process 400 according to one embodiment of the invention. The download process 400 is, for example, processing performed by the block 310 illustrated in FIG. 3. The download process 400 can begin with a decision 402 that determines whether adequate network bandwidth is available. When the decision 402 determines that adequate network bandwidth is available to the destination device, download of first queued digital content can be initiated 404. Once the download of the first queued digital content is initiated 404, the digital content can be transferred from a data store over the network to the destination device. A decision 406 can determine whether the download of the first queued digital content has been successful. When the decision 406 determines that download has been successful, then the downloaded content can be removed 408 from the delivery queue. Here, since in the destination device has successfully received the downloaded digital content, the corresponding delivery queue entry can be removed 408. On the other hand, when the decision 406 determines that the download of the queued digital content was unsuccessful, then the block 408 is bypassed so that download of the digital content can be retried at a later point in time.

Following the block 408 or its being bypassed, a decision 410 can determine whether more queued digital content is available for download. When the decision 410 determines that there is more queued digital content for the destination device, the download process 400 can return to repeat the block 404 so that download of next queued digital content can be initiated and then similarly processed. Alternatively, when the decision 402 determines that adequate network bandwidth is not available to the destination device, the blocks 404-410 can be bypassed such that downloading of media content is not attempted at this time.

The digital asset as discussed herein can pertain to a single digital asset or a collection of digital assets. An example of a collection of digital assets is a playlist. A collection of digital assets can include digital assets of a single type or a mixture of different types of digital assets. In the case, of a collection, each of the digital assets can be processed individually to determine where and when the digital asset is be delivered.

In one embodiment, no graphical user interface is presented to a user and the delivery process is performed without input from the user (other than possibly delivery preference set in advance). However, in another embodiment, a graphical user interface can also be presented on a display screen of an electronic device to inform or assist the user with respect to delivery of a digital asset. The graphical user interface can be presented as one or more display screens on a display device. The graphical user interface can inform the user as to where the digital assets are to be or have been delivered. In the case of a collection, the graphical user interface can inform the user of the one or more destinations for the various digital assets.
The graphical user interface could also permit a user to alter default delivery selections to choose alternative delivery destinations. The graphical user interface could also enable a user to set device delivery preferences or account delivery preferences, either of which can affect the default delivery destinations. The graphical user interface can also allow a user to start, stop, pause or resume delivery of one or more digital assets.

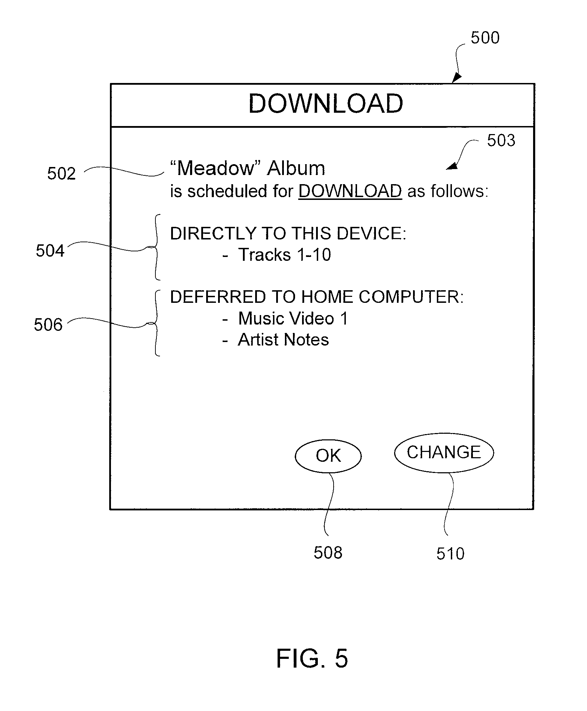

FIG. 5 illustrates an exemplary graphical user interface 500 according to one embodiment of the invention. The graphical user interface 500 includes a metadata portion 502 that describes a digital asset to be delivered. Here, the digital asset is a playlist (e.g., album) that is entitled "Meadow". The graphical user interface 500 also includes a destination portion 503 that specifies a default destination for each of the plurality of digital assets within the playlist. In this embodiment, the destination portion 503 include a first region 504 that describes that "Tracks 1-10" of the playlist are to be delivered to the current device used by the user (e.g., acquisition device), and a second region 506 that describes that "Music Video 1" and "Artist Notes" of the playlist are to be delivered to a particular other destination device (e.g., home computer). In addition, a user control 508 can allow the user to accept the default destinations, and a change control 510 can allow the user to change the default destinations. For example, on selecting the change control 510, the graphical user interface can be altered to display user control(s) that allow the user to direct delivery of any of the digital assets to any of the available destination devices for a given user.

The portable electronic device utilized herein can, for example, correspond to a computing device (e.g., personal computer), mobile phone (e.g., cellular phone), personal digital assistant (PDA), media player (e.g., music, videos, games, images), media storage device, camera, and/or the like. The electronic device may also be a multi-functional device that combine two or more of these device functionalities into a single device. In one embodiment, the portable electronic device should support network communications so that the portable electronic device can couple to a network. In another embodiment, the portable electronic device should support wireless voice communication and wireless data communication.

The portable electronic device utilized herein can further be a hand-held electronic device. The term hand-held generally means that the electronic device has a form factor that is small enough to be comfortably held in one hand. A hand-held electronic device may be directed at one-handed operation or two-handed operation. In one-handed operation, a single hand is used to both support the device as well as to perform operations with the user interface during use. In two-handed operation, one hand is used to support the device while the other hand performs operations with a user interface during use or alternatively both hands support the device as well as perform operations during use. In some cases, the hand-held electronic device is sized for placement into a pocket of the user. By being pocket-sized, the user does not have to directly carry the device and therefore the device can be taken almost anywhere the user travels (e.g., the user is not limited by carrying a large, bulky and often heavy device).

The digital media assets (i.e., digital media items) can pertain to video items (e.g., video files or movies), audio items (e.g., audio files or audio tracks, such as for songs (music), podcasts or audiobooks), or image items (e.g., photos). The digital media assets can also include or be supplemented by text or multimedia files.

The various aspects, features, embodiments or implementations of the invention described above can be used alone or in various combinations.

The invention is preferably implemented by software, hardware, or a combination of hardware and software. The invention can also be embodied as computer readable code on a computer readable medium. The computer readable medium is any data storage device that can store data which can thereafter be read by a computer system. Examples of the computer readable medium generally include read-only memory and random-access memory. More specific examples of computer readable medium are tangible and include Flash memory, EEPROM memory, memory card, CD-ROM, DVD, hard drive, magnetic tape, and optical data storage device. The computer readable medium can also be distributed over network-coupled computer systems so that the computer readable code is stored and executed in a distributed fashion.

The advantages of the invention are numerous. Different aspects, embodiments or implementations may, but need not, yield one or more of the following advantages. One advantage of the invention is that acquired digital assets (e.g., media items) can be delivered to different electronic devices. For example, if a user has acquired a digital asset, that digital asset can be electronically delivered to one or more of the electronic devices associated with the user. Another advantage of the invention is that different types of digital assets can be delivered to different ones of the electronic devices. Still another advantage of the invention is that digital assets can be delivered to electronic devices such that limited resources, such as data storage, on the electronic devices are not wasted by storage of digital assets that are not usable on such devices. Yet still another advantage of the invention is a user interface to facilitate control or management of digital assets to different electronic devices.

The many features and advantages of the present invention are apparent from the written description. Further, since numerous modifications and changes will readily occur to those skilled in the art, the invention should not be limited to the exact construction and operation as illustrated and described. Hence, all suitable modifications and equivalents may be resorted to as falling within the scope of the invention.

## Claims

1. A method for delivering an acquired digital asset from an online digital asset store to an electronic device via a network, said method comprising:
receiving, via an acquisition device, a user selection of a digital asset available from an online digital asset store;
providing usage rights to the digital asset available from the online digital asset store;
determining whether the digital asset is be delivered to the acquisition device;
arranging for delivery of the digital asset to the acquisition device when it is determined that the digital asset is be delivered to the acquisition device;
determining whether the digital asset is be delivered to at least one destination device other than the acquisition device; and
arranging for delivery of the digital asset to the at least one destination device when it is determined that the digital asset is be delivered to the at least one destination device.

2. A method as recited in claim 1, wherein the acquisition device and the at least one destination device are both associated with a particular user having a user account with the online digital asset store.

3. A method as recited in claim 1, wherein said arranging for delivery of the digital asset to the acquisition device comprises placing the digital asset in a delivery queue for delivery to the acquisition device while the acquisition device is connected to the network.

4. A method as recited in claim 3, wherein said determining of whether the digital asset is to be delivered to the acquisition device is dependent upon at least one of available network bandwidth, a device capacity, a user preference, or a user input regarding delivery.

5. A method as recited in claim 1, wherein said arranging for delivery of the digital asset to the at least one destination device comprises placing the digital asset in a delivery queue for delivery to the at least one destination device while the at least one destination device is connected to the network.

6. A method as recited in claim 5, wherein said arranging for delivery of the digital asset to the acquisition device comprises placing the digital asset in the delivery queue for delivery to the acquisition device while the acquisition device is connected to the network.

7. A method as recited in claim 5, wherein said determining of whether the digital asset is to be delivered to the at least one destination device is dependent upon at least one of available network bandwidth, a device capacity, a user preference, or a user input regarding delivery.

8. A method as recited in claim 1, wherein said arranging for delivery of the digital asset to the acquisition device comprises placing the digital asset in a first delivery queue for delivery to the acquisition device, and wherein said arranging for delivery of the digital asset to the at least one destination device comprises placing the digital asset in a second delivery queue for delivery to the at least one destination device.

9. A method as recited in claim 8, wherein delivery of the digital asset from the first delivery queue to the acquisition device or from the second delivery queue to the at least one destination device is dependent upon existence of a network connection.

10. A method as recited in claim 1, wherein the digital asset has an asset type associated therewith, and wherein said determining whether the digital asset is be delivered to the acquisition device is dependent on the asset type.

11. A method as recited in any of claims 1-10, wherein the digital asset is a collection of digital assets, and wherein each of the digital assets can be processed individually to determine whether the digital asset is be delivered to the acquisition device, and to determine whether the digital asset is be delivered to at least one destination device other than the acquisition device.

12. A method as recited in claim 11, wherein the online digital asset store is an online media store, and wherein the digital asset includes at least one media item.

13. A computer readable medium including at least executable computer program code tangibly stored thereon for delivering at least one digital asset from an online digital asset store to an electronic device via a network according to the method of any of claims 1 to 12.

14. An online media store, comprising:
a delivery queue provide for each of a plurality of user accounts, the delivery queue for each user account operating to separately queue media content for delivery to a plurality of electronic devices associated with the user account;
a queue manager for coordinating entries in the delivery queue for media content to be available to at least one of the electronic devices associated with one or more of the plurality of user accounts; and
a delivery manager for managing delivery of the media content identified by the entries in the delivery queue to the respective electronic devices.

15. A graphical user interface, comprising:
a metadata portion describing a digital asset that has been acquired; and
a destination portion describing one of a plurality of destination devices for which the digital assets is to be or has been delivered.

16. A graphical user interface as recited in claim 15, wherein when the digital asset is a collection of digital assets, said destination portion describes two or more destination devices and specifies for each of the digital assets the one or more of the destination devices to receive the respective digital assets, wherein each of the destination devices is designated as receiving at least one of the digital assets of the collection.
